# EUROPÄISCHE PATENTSCHRIFT

(11) **EP 1 809 993 B1**
(45) Veröffentlichungstag und Bekanntmachung des Hinweises auf die Patenterteilung: **31.03.2021**
(21) Anmeldenummer: 05801417.6
(22) Anmeldetag: 09.11.2005
(51) Int. Cl.: B67C 3/28, G01F 23/00, G01F 25/00, G01F 22/00

(54) **PRÜFEN DER INTEGRITÄT VON PRODUKTEN IN BEHÄLTERN**
TESTING THE INTEGRITY OF PRODUCTS IN CONTAINERS
CONTROLE DE L'INTEGRITE DE PRODUITS DANS DES CONTENANTS

(30) Priorität: 09.11.2004 DE 102004054349
(43) Veröffentlichungstag der Anmeldung: 25.07.2007
(73) Patentinhaber: HEUFT SYSTEMTECHNIK GMBH, 56659 Burgbrohl (DE)
(72) Erfinder: HEUFT, Bernhard, 56659 Burgbrohl (DE)
(74) Vertreter: Gritschneder, Sebastian
(86) Internationale Anmeldenummer: PCT/EP2005/055838
(87) Internationale Veröffentlichungsnummer: WO 2006/051078

(56) Entgegenhaltungen:
- DE-A1- 3 417 338
- DE-A1- 4 115 207
- DE-A1- 4 200 603
- US-A- 3 818 232
- US-A- 5 750 998
- US-A- 5 864 600
- US-A- 6 104 033
- US-A1- 2004 000 653
- US-B1- 6 338 272

## Beschreibung

### Technisches Umfeld

Die Erfindung betrifft ein Verfahren zum Prüfen der Integrität von Produkten in verschlossenen Behältern der Lebensmittel- und Getränkeindustrie, wobei mehrere Merkmale des Produktes mit physikalischen Messmethoden erfasst werden und auf Grund der Messergebnisse ein Gut-Schlecht-Signal erzeugt wird:

Produkte in Behältern, insbesondere Lebensmittel, z.B. Getränke in Kunststoff- oder Glasflaschen, können mit verschiedenen physikalischen Messmethoden untersucht werden. Es kann die Absorption des Produktes bei bestimmten Wellenlängen von Licht oder Infrarotstrahlung gemessen werden, wobei auch die Drehung von polarisiertem Licht gemessen werden kann. Ebenso kann die Absorption von Röntgen- oder Gammastrahlung gemessen werden, wobei hier die Absorption vom Atomgewicht der in dem Produkt vorhandenen Elemente abhängt. Mittels eines Hochfrequenzfeldes kann die Dielektrizitätskonstante gemessen werden, die bei Getränken insbesondere vom Salzgehalt abhängt. Außer diesen Materialeigenschaften können auch makroskopische Eigenschaften, z.B. die Füllhöhe des Produkts in dem Behälter oder die Masse des Produkts in dem Behälter gemessen werden. In der deutschen Patentanmeldung 10 2004 053 567.1 (Anmeldetag 5. November 2004, Titel: "Verfahren zur Feststellung der Integrität eines in einem Behälter befindlichen Produktes", eigenes Zeichen: 36144-de) wird ein vorgegebenes Merkmal des Produkts mittels zweier unterschiedlicher physikalischen Messmethoden bestimmt, wobei Abweichungen der nach beiden Messmethoden erhaltenen Werten des vorgegebenen Merkmals ein Hinweis auf die Verletzung der Integrität des Produkts sind. Der Füllstand des Produktes in dem Behälter kann z.B. mittels Röntgenstrahlenabsorption und mittels Dämpfung eines HF Feldes ermittelt werden. Beide Verfahren müssen kalibriert werden, da die Röntgenstrahlungsabsorption vom Atomgewicht und die Dämpfung des HF-Feldes von der Dielektrizitätskonstante des Produktes abhängen. Wenn die mit beiden Messmethoden erhaltenen Werte nicht derselben Füllhöhe entsprechen, so bedeutet dies, dass entweder das Atomgewicht der in dem Produkt vorhandenen Elemente oder die Dielektrizitätskonstante des Produktes nicht den Vorgaben, d.h. einem integeren oder unverfälschten Produkt, entsprechen.

Aus DE-A-43 43 058 ist eine multisensorielle Kamera für die Qualitätssicherung bekannt, bei der verschiedene, auf unterschiedlichen physikalischen Prinzipien arbeitende bildgebende Sensoren wie s/w und Farbkameras, bildgebende 3D-Sensoren, bildgebende Sensoren, die mit durchdringender Strahlung arbeiten, bildgebende NIR-Spektroskopie-Sensoren gemeinsam eingesetzt werden. Die Sensoren sind dabei so angeordnet, dass sie das gleiche Bildfeld erfassen und sich entsprechende Bildpunkte der Sensoren auf gleiche Bildpunkte der Produktoberfläche beziehen. Die Signale der Sensoren werden mit Hilfe eines Klassifikators bildpunktweise in ein Klassenbild umgewandelt, bei dem jedem Bildpunkt ein Code zugeordnet wird, welcher seine Zugehörigkeit zu einer von zahlreichen, vorher eingelernten Klassen entspricht. Mittels dieser multisensioriellen Kamera können geschredderte Metall- und Kunststoffabfälle aus einem ungeordneten Schüttstrom aussortiert werden.

Auch in US 5864600 werden Behälter in Echtzeit mittels eines multidimensionalen Bildes, von jedem zu untersuchendem Behälter, auf Eigenschaften wie Füllhöhe, Platzierung des Deckels, Behälterdruck, Schaumdichte und Leckage untersucht.

US 6104033 beschreibt ein Verfahren und eine Vorrichtung zum Bestimmen des Inhaltes eines Gefäßes, das zwei oder mehrere nicht mischbaren Komponenten enthält, mittels spektroskopischer Methoden.

Aus US 3818232 ist ein Verfahren und eine Vorrichtung für die Überwachung von automatisch befüllten Behältern bekannt, wobei der durchschnittliche Füllstand der Behälter mittels Strahlung, wie etwa Gammastrahlung bestimmt wird.

US 6338272 beschreibt ein Verfahren zur Bestimmung von Parametern, wie zum Beispiel dem Füllstand oder Druck, in verschlossenen Behältern, indem primäre Schwingungen in der Behälterwand angeregt werden und dadurch angeregte sekundäre Schwingungen im Behälter analysiert werden.

Eine weitere Vorrichtung zur Überprüfung des Füllstandes wird in DE 3417338 beschrieben.

In US 2004000653 werden anhand spektroskopischer Methoden unter anderem die Viskosität und Farbe eines Getränkes in einem verschlossenen Behälter untersucht.

DE 4115207 offenbart eine redundante Überfüllsicherung, die zur Begrenzung der Füllmenge von flüssigen Medien in offenen Behältern oder verflüssigter Gase in Druckbehältern eingesetzt werden kann.

Eine weitere Überfüllsicherung ist aus DE 4200603 bekannt, wobei hier Chargen beliebiger Medien vor Überfüllung geschützt werden, indem der Pegel des Behälterinhalts permanent mittels eines Schwimmers überwacht wird.

Die Integrität oder Unverfälschtheit eines Produktes in einem Behälter wird gegenwärtig durch chemische Laboruntersuchungen festgestellt, wozu das Produkt aus dem Behälter genommen wird.

### Offenbarung der Erfindung

### Technisches Problem

Die Aufgabe der Erfindung besteht in der Prüfung der Integrität eines in einem verschlossenen Behälter enthaltenen Produktes der Lebensmittel oder Getränkeindustrie.

### Technische Lösung

Erfindungsgemäß wird diese Aufgabe bei einem Verfahren der eingangs genannten Art dadurch gelöst, dass zur Erzeugung des Gut-Schlecht-Signals mehrere der Messergebnisse miteinander in Beziehung gesetzt werden.

Dadurch, dass mehrere Merkmale des Produkts überprüft werden, kann die Integrität mit größerer Zuverlässigkeit sichergestellt werden, als wenn nur ein einziges Merkmal überprüft wird.

Die Messergebnisse können auf unterschiedliche Weise miteinander in Beziehung gesetzt werden. Einige Möglichkeiten werden nachfolgend aufgezählt:
- Die Messwerte werden auf einen Referenzwert normiert, der der Wert ist, der bei einem fehlerfreien Produkt vorliegt. Die normierten Messergebnisse geben dann die Abweichung als Faktor oder als Prozentwert an. Die Abweichungen der Messergebnisse von den jeweiligen Referenzwerten können als skalare Größen addiert werden. Wenn die Summe der Abweichungen einen Schwellwert übersteigt, so wird ein Schlecht-Signal erzeugt. Es ist hierbei möglich, die einzelnen Messergebnisse zu wichten, sodass die einzelnen Messverfahren das Ergebnis unterschiedlich stark beeinflussen.
- Die Messergebnisse können einen multidimensionalen Raum bilden, in dem eine oder mehrere Grenzflächen die guten und die schlechten Wertebereiche voneinander abgrenzen. Diese Grenzfläche kann durch eine Funktion mit einer der Anzahl der Messergebnisse entsprechenden Anzahl von Veränderlichen wiedergegeben werden. Ein einfacher Fall für eine mathematische Gleichung ist die Kugelfläche in einem mehrdimensionalen Raum (R² = u² + v² + w² + x² ...). In dieser Gleichung können jedoch auch gemischte Terme auftreten, d.h. die Beeinflussung eines Messergebnisses kann von dem Wert eines anderen Messergebnisses abhängen. Die Gut-Schlecht-Grenzfläche hat dann keine Kugelform, sondern eine beliebige unregelmäßige Form. In der Praxis ist es einfacher, eine entsprechende Wertetabelle im laufenden Betrieb einzulesen.
- Schließlich können die Messergebnisse auch noch durch Fuzzy-Logik miteinander verknüpft sein.

Als Messverfahren kommen alle zur Untersuchung des jeweiligen Produktes geeigneten Verfahren in Frage. Bei Getränkeflaschen sind es insbesondere Färb-, IR-, Röntgen- oder Gamma-Spektroskopie, die Bestimmung der Drehung von polarisiertem Licht durch das Produkt, die Bestimmung der Füllhöhe oder die Bestimmung des Behälterinnendrucks.

Zur Bestimmung von Getränken in Glas- oder Kunststoffflaschen hat sich insbesondere die Kombination von NIR-Spektroskopie, die Messung der Röntgen-Absorption und die Messung des Dielektrizitätsmoduls bewährt.

Bei der Überprüfung einzelner mit dem Produkt gefüllter Behälter müssen in Abhängigkeit von der verwendeten Messmethode zum Teil relativ große Abweichungen zugelassen werden, da z.B. bei Glas- oder Kunststoffflaschen die Wandstärke des Behälters das Messergebnis sehr stark beeinflussen kann. Nach einem bevorzugten Verfahren werden die Messergebnisse zunächst einer Messmethode daher über eine große Anzahl von Behältern gemittelt. Für die über eine größere Anzahl von Behältern gemittelten Werte der einzelnen Merkmale des Produktes können die zulässigen Abweichungen wesentlich kleiner angesetzt werden. Mit dieser Ausgestaltung der Erfindung lassen sich daher systematische Produktfehler, seien sie absichtlich oder unabsichtlich verursacht, mit hoher Zuverlässigkeit feststellen.

Die Mittelwertbildung ist zweckmäßig gleitend, d.h. der Mittelwert wird jeweils über eine bestimmte Anzahl der zuletzt überprüften Behälter gebildet. Zum Beispiel können zur Mittelwertbildung jeweils die letzten hundert Behälter verwendet werden.

Selbstverständlich können die einzelnen Messergebnisse zusätzlich in herkömmlicher Weise für sich ausgewertet werden, d.h. wenn ein einzelnes Messergebnis nicht in einem bestimmten Bereich liegt, so wird der betreffende Behälter aus dem weiteren Produktionsverfahren ausgeschlossen.

Insgesamt werden die Messergebnisse damit in dreifacher Weise verwendet:
- Jedes Messergebnis wird für sich daraufhin überprüft, ob es in einem bestimmten Bereich liegt. Wenn es außerhalb des Bereiches liegt, wird der Behälter ausgeschlossen;
- Die Messergebnisse mehrerer Messmethoden werden miteinander in Beziehung gesetzt, z.B. werden die prozentualen Abweichungen von den betreffenden Referenzwerten skalar addiert, und die Summe der Abweichungen wird mit einem Schwellwert verglichen. Sie können auch in eine Gleichung erster oder höherer Ordnung mit einer entsprechenden Anzahl von Veränderlichen eingesetzt werden und je nach dem, ob das betreffende Produkt in diesem mehrdimensionalen Raum innerhalb oder außerhalb einer Gut-Schlecht-Grenzfläche liegt wird der Behälter weiterverarbeitet oder ausgeschlossen.
- Es wird der Mittelwert der Messergebnisse der einzelnen Messmethoden über eine größere Anzahl von Behältern gebildet und dieser Mittelwert kann wieder so wie im ersten Fall für jede Messmethode getrennt mit einem Referenzwert verglichen werden und/oder die Mittelwerte der Messergebnisse mehrerer Messmethoden können wie unter 2. angegeben miteinander in Beziehung gesetzt werden.

Ein besonderer Vorteil des erfindungsgemäßen Verfahrens besteht darin, dass die Behälter im verschlossenen Zustand und damit am Ende des Herstellungsverfahrens geprüft werden können, zu dem eine nachträgliche Verletzung der Integrität weitgehend ausgeschlossen ist.

### Kurze Beschreibung von Zeichnungen

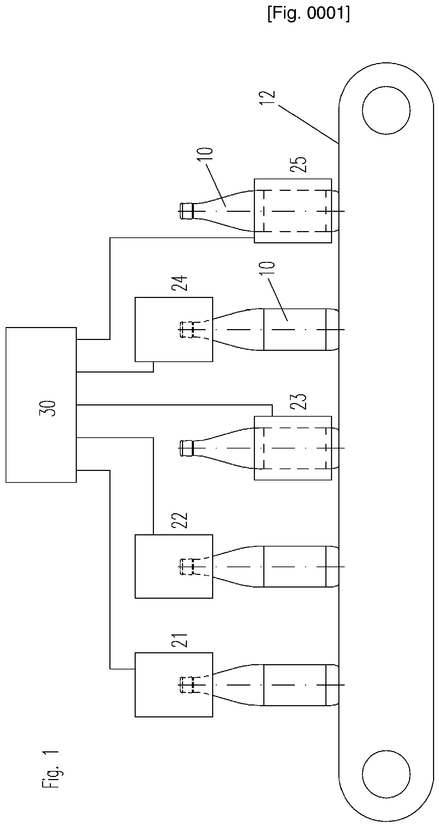

Ein Ausführungsbeispiel der Erfindung wird nachfolgend anhand der Zeichnung erläutert. Die einzige Figur zeigt dabei schematisch eine Vorrichtung zur Prüfung der Integrität von Getränkeflaschen.

Eine Vielzahl von Getränkeflaschen 10 werden aufeinander folgend mit geringem Abstand auf einem Transporteur 12 durch mehrere Inspektionseinrichtungen 21 bis 25 transportiert.

In der ersten und in der zweiten Inspektionseinrichtung 21, 22 wird die Füllhöhe des Getränks in der Flasche 10 mittels Röntgenstrahlen und einem HF-Feld ermittelt. Die ermittelten Werte für den Füllstand werden einer Steuerungseinrichtung 30 übertragen, in der die Werte verglichen werden.

In der dritten Inspektionseinrichtung 23 wird die Röntgenabsorption im unteren, zylindrischen Bereich der Flaschen 10 gemessen.

In der vierten Inspektionseinrichtung 24 wird mittels des aus WO 98/21557 bekannten Verfahrens der Innendruck des Behälters gemessen.

In der fünften Inspektionseinrichtung 25 wird die Absorption eines Infrarotstrahls von 1,06 µm gemessen.

Die Messwerte aller Inspektionseinrichtungen 21 bis 25 werden an die Steuerung 30 übermittelt.

Wie bereits erwähnt, werden die Signale der ersten und zweiten Inspektionseinrichtungen 21, 22 miteinander verglichen und aus beiden Signalen wird ein Füllhöhe-Differenzsignal gebildet. Das Füllhöhe-Differenzsignal darf für jeden einzelnen Behälter einen vorgegebenen Schwellwert S nicht überschreiten. Die Werte der drei anderen Inspektionseinrichtungen 23, 24 und 25 werden jeweils mit einem Referenzwert verglichen, wobei für jeden einzelnen Behälter die Abweichung vom Referenzwert nicht mehr als 10 % betragen darf.

Für jeden Behälter werden die von den Inspektionseinrichtungen 23, 24 und 25 gemeldeten prozentualen Abweichungen vom Referenzwert außerdem aufsummiert, wobei die Summe der prozentualen Abweichungen nicht mehr als 20 % betragen darf.

Ferner wird der Mittelwert der Füllhöhe-Differenzsignale der letzten hundert Flaschen 10 gebildet und dieser Mittelwert darf ein Zehntel des Schwellwertes S nicht übersteigen. Ebenso wird der Mittelwert der Signale der Inspektionseinrichtungen 23, 24 und 25 der letzten hundert Flaschen 10 gebildet und dieser Mittelwert darf maximal ein Fünftel des Wertes von den jeweiligen Referenzwerten abweichen, der für die Abweichung der einzelnen Flaschen 10 gilt, also 2 %.

Zusätzlich wird die Summe der Quadrate der prozentualen Abweichungen der über jeweils hundert Flaschen 10 gemittelten Werte berechnet und diese Summe darf einen vorgegebenen weiteren Schwellwert nicht übersteigen. Dieser Schwellwert ist dabei so gesetzt, dass ein Fehlersignal bereits erzeugt wird, wenn die Abweichungen der Messwerte der Inspektionseinrichtungen 23, 24 und 25 für sich betrachtet noch akzeptabel sind.

### Liste der Bezugszeichen:

10 Getränkeflasche
12 Transporteur
21, 22, 23, 24 und 25 Inspektionseinrichtung
30 Steuerungseinrichtung

## Patentansprüche

1. Verfahren zum Prüfen der Integrität von Produkten in verschlossenen Behältern (10) der Lebensmittel- und Getränkeindustrie, wobei mehrere Merkmale des Produktes mit mehreren verschiedenen physikalischen Messmethoden erfasst werden und auf Grund der Messergebnisse für mehrere Merkmale des Produkts ein Gut-Schlecht-Signal erzeugt wird, wobei zur Erzeugung des Gut-Schlecht-Signals mehrere der mit verschiedenen physikalischen Messmethoden erfassten Messergebnisse miteinander in Beziehung gesetzt werden.

2. Verfahren nach Anspruch 1, wobei es sich bei der physikalischen Messmethode um Farb-, IR-, Röntgen- oder Gamma-Spektroskopie, die Bestimmung der Drehung von polarisiertem Licht durch das Produkt, die Bestimmung der Füllhöhe oder die Bestimmung des Behälterinnendrucks handelt.

3. Verfahren nach Anspruch 1 oder 2, wobei zumindest für einige Messergebnisse deren Abweichung von einem Referenzwert festgestellt wird und die Abweichungen als skalare Größen aufsummiert werden und die Summe der Abweichungen mit einem Schwellwert verglichen wird.

4. Verfahren nach Anspruch 3, wobei die Messergebnisse gewichtet werden.

5. Verfahren nach Anspruch 3 oder 4, wobei die Quadrate oder höheren Potenzen der Abweichungen aufsummiert werden.

6. Verfahren nach Anspruch 1 oder 2, wobei die Messergebnisse einen multidimensionalen Raum bilden, in dem eine oder mehrere Grenzflächen die guten und die schlechten Wertebereiche voneinander abgrenzen.

7. Verfahren nach Anspruch 1 oder 2, wobei die Messergebnisse durch Fuzzy-Logik miteinander verknüpft werden.

8. Verfahren nach einem der Ansprüche 1 bis 7, wobei die Messergebnisse jeder Messmethode über eine größere Anzahl von Behältern gemittelt werden.

9. Verfahren nach einem der Ansprüche 1 bis 8, wobei zusätzlich für jedes Produkt in einem Behälter (10) ein oder mehrere Messergebnisse getrennt ausgewertet werden.

10. Verfahren nach einem der Ansprüche 1 bis 8, wobei
für jedes Produkt in einem Behälter (10) mindestens ein Messergebnis getrennt ausgewertet wird,
für jedes Produkt in einem Behälter (10) mehrere Messergebnisse zur Erzeugung des Gut-Schlecht-Signals miteinander in Beziehung gesetzt werden und
zumindest die Messergebnisse einer Messmethode über mehrere Produkte gemittelt werden und die Messergebnisse miteinander in Beziehung gesetzt werden, um ein weiteres Gut-Schlecht-Signal zu erzeugen.

## Claims

1. A method for testing the integrity of products in sealed containers (10) of the food and beverage industry, wherein several features of the product are detected using several different physical measurement methods; and a good-bad signal is produced on the basis of the measurement results for several features of the product, wherein several of the measurement results detected with different physical measurement methods are correlated with each other for producing the good-bad signal.

2. The method according to claim 1, wherein the physical measurement method is colour, IR, X-ray or gamma spectroscopy, determination of the rotation of polarized light through the product, determination of the fill level or determination of the pressure inside the container.

3. The method according to claim 1 or 2, wherein the deviation of at least some measurement results from a reference value is recorded and the deviations are added up as scalar values and the sum of the deviations is compared with a threshold value.

4. The method according to claim 3, wherein the measurement results are weighted.

5. The method according to claim 3 or 4, wherein the squares or higher powers of the deviations are added up.

6. Method according to claim 1 or 2, wherein the measurement results form a multidimensional space in which one or more interfaces separate the good and the bad value ranges from each other.

7. The method according to claim 1 or 2, wherein the measurement results are linked to each other by fuzzy logic.

8. The method according to one of the claims 1 to 7, wherein the measurement results of each measurement method are averaged over a larger number of containers.

9. The method according to one of the claims 1 to 8, wherein additionally one or more measurement results are evaluated separately for each product (10) in a container.

10. The method according to one of the claims 1 to 8, wherein
for each product in a container (10) at least one measurement result is evaluated separately;
for each product in a container (10) several measurement results are correlated with each other in order to produce the good-bad signal; and
at least the measurement results of one measurement method are averaged over several products; and the measurement results are correlated with each other in order to produce a further good-bad signal.

## Revendications

1. Procédé de contrôle de l'intégrité de produits dans des contenants (10) fermés de l'industrie agro-alimentaire et des boissons, plusieurs caractéristiques du produit étant détectées au moyen de plusieurs méthodes différentes de mesure physiques et un signal bon/mauvais étant généré sur la base des résultats de mesure pour plusieurs caractéristiques du produit, plusieurs des résultats de mesure collectés au moyen des méthodes différentes de mesure physiques étant mis en relation les uns avec les autres pour générer le signal bon/mauvais.

2. Procédé selon la revendication 1, dans lequel la méthode de mesure physique est une spectroscopie du domaine visible, IR, des rayons X ou gamma, la détermination de la rotation de lumière polarisée à travers le produit, la détermination de la hauteur de remplissage ou la détermination de la pression intérieure du contenant.

3. Procédé selon la revendication 1 ou 2, dans lequel, au moins pour quelques résultats de mesure, l'écart entre ceux-ci et une valeur de référence est constaté et les écarts sont totalisés sous la forme de grandeurs scalaires et la somme des écarts est comparée à une valeur seuil.

4. Procédé selon la revendication 3, dans lequel les résultats de mesure sont pondérés.

5. Procédé selon la revendication 3 ou 4, dans lequel les carrés ou des puissances supérieures des écarts sont totalisés.

6. Procédé selon la revendication 1 ou 2, dans lequel les résultats de mesure forment un espace multidimensionnel, dans lequel une ou plusieurs surfaces limites délimitent les domaines de valeurs bons et mauvais les uns par rapport aux autres.

7. Procédé selon la revendication 1 ou 2, dans lequel les résultats de mesure sont combinés les uns aux autres par une logique floue.

8. Procédé selon l'une des revendications 1 à 7, dans lequel une moyenne des résultats de mesure de chaque méthode de mesure est calculée pour un nombre relativement élevé de contenants.

9. Procédé selon l'une des revendications 1 à 8, dans lequel un ou plusieurs résultats de mesure sont en plus évalués séparément pour chaque produit dans un contenant (10).

10. Procédé selon l'une des revendications 1 à 8, dans lequel
pour chaque produit dans un contenant (10), au moins un résultat de mesure est évalué séparément,
pour chaque produit dans un contenant (10), plusieurs résultats de mesure sont mis en relation les uns avec les autres pour générer le signal bon/mauvais et
une moyenne au moins des résultats de mesure d'une méthode de mesure est calculée pour plusieurs produits et les résultats de mesure sont mis en relation les uns avec les autres pour générer un signal bon/mauvais supplémentaire.
